# EUROPÄISCHE PATENTSCHRIFT

(11) **EP 2 802 505 B1**
(45) Veröffentlichungstag und Bekanntmachung des Hinweises auf die Patenterteilung: **15.03.2017**
(21) Anmeldenummer: 13700493.3
(22) Anmeldetag: 07.01.2013
(51) Int. Cl.: B62D 5/083, B62D 6/10

(54) **SERVOLENKBAUGRUPPE MIT DIFFERENZWINKELSENSORIK**
POWER STEERING WITH SENSORS FOR DIFFERENTIAL ANGLE
ENSEMBLE DE DIRECTION ASSISTÉE COMPRENANT UN SYSTÈME DE DÉTECTION DE POSITION ANGULAIRE

(30) Priorität: 10.01.2012 DE 102012100133; 07.08.2012 DE 102012107211
(43) Veröffentlichungstag der Anmeldung: 19.11.2014
(73) Patentinhaber: Tedrive Steering Systems GmbH, 42489 Wülfrath (DE)
(72) Erfinder: KIRSCHBAUM, Sven, 40822 Mettmann (DE); MÜLLER, Jens-Hauke, 42553 Velbert-Neviges (DE)
(74) Vertreter: Patentanwälte Bauer Vorberg Kayser
(86) Internationale Anmeldenummer: PCT/EP2013/050162
(87) Internationale Veröffentlichungsnummer: WO 2013/104587

(56) Entgegenhaltungen:
- EP-A1- 1 516 799
- EP-A1- 1 719 690
- JP-A- 2009 069 106
- JP-A- 2011 209 143

## Beschreibung

Die vorliegende Erfindung betrifft eine Servolenkbaugruppe für eine Servolenkung, insbesondere für eine hydraulische Servolenkung, von Kraftfahrzeugen sowie eine entsprechende Verwendung.
Servolenkbaugruppen für hydraulische Servolenkungen von Fahrzeugen umfassen unter anderem Servoventile, die auch als Drehservoventile bekannt sind. Diese regeln den Hydraulikdruck und damit die Lenkunterstützung in Abhängigkeit vom aufgebrachten Lenkmoment des Fahrers. Es kommen meist Drehservoventile zum Einsatz, bei denen sich eine Eingangswelle, die über eine Lenksäule mit einem Lenkrad verbunden ist, relativ zu einem Ventilteil (auch als Stellglied, Steuerhülse oder Sleeve bezeichnet) verdreht, das mit der Ausgangswelle und bei Zahnstangenlenkungen mit einem Lenkritzel (auch als Pinion bezeichnet) verbunden ist. Durch ein Torsionssystem zwischen Eingangswelle und Stellglied werden eine drehmomentabhängige Verstellung des Stellglieds des Servoventils und damit eine drehmomentabhängige Ventil- und damit Lenkkraftunterstützungscharakteristik realisiert.
Zur Verwirklichung diverser weiterer Funktionen eines Momentenstellers, beispielsweise Spurhalteassistent, Über- und Untersteuerungsassistent, haptisches Feedback, variable Lenkunterstützung zum Beispiel in Abhängigkeit der Fahrzeuggeschwindigkeit oder Beladung, Citymode, Parkpilot, Lenkmomentüberlagerung usw., ist eine vom anliegenden Drehmoment unabhängige Einstellung der Stellung des Stellglieds zur Beeinflussung der Lenkkraftunterstützungscharakteristik des Servoventils bekannt.
Ein derartiges Servolenkventil ist beispielsweise in der Offenlegungsschrift DE 10 2004 049 686 A1 beschrieben. Hier wird die Verstellung der Lenkkraftunterstützungscharakterisik durch die Einstellung eines Relativwinkels zwischen dem Stellglied und einer Ausgangswelle des Servoventils erreicht.

Dokument EP1516799 A1 wird als nächstliegender Stand der Technik erkannt und beschreibt ein ähnliches System der Erfindung die aber als elektrisches System gebaut wird.

Vom Stand der Technik liegt der Erfindung die Aufgabe zugrunde, die Servolenkbaugruppe der eingangs genannten Art dahingehend weiterzubilden, dass diese besser funktionsüberwacht werden kann, um die Fahrsicherheit zu erhöhen und/oder die Regelung der Lenkkraftunterstützung zu verbessern. Diese Aufgabe wird durch eine Servolenkbaugruppe gemäß Patentanspruch 1 sowie die beanspruchte Verwendung gelöst. Weitere, besonders vorteilhafte Ausgestaltungen der Erfindung offenbaren die jeweiligen Unteransprüche.

Die erfindungsgemäße Servolenkbaugruppe für eine Servolenkung von Kraftfahrzeugen umfasst eine Eingangswelle zur Verbindung mit einem Lenkrad, eine mit der Eingangswelle gekoppelte Ausgangswelle für den Wirkeingriff mit einer Lenkstange, wobei die Kopplung zwischen Eingangswelle und Ausgangswelle eine Relativverdrehung zwischen diesen zulässt. Erfindungsgemäß ist ferner ein Servoregler, bevorzugt ein hydraulisches Servoventil, mit einem drehbaren, mit der Ausgangswelle in Eingriff und von dieser angetriebenes Stellglied vorgesehen, wobei in Abhängigkeit der Relativverdrehung zwischen Eingangswelle und Stellglied die Lenkkraftunterstützung gesteuert wird. Der Eingriff zwischen Ausgangswelle und Stellglied sieht erfindungsgemäß eine Relativverstellung zwischen der Ausgangswelle und dem Stellglied vor. Erfindungsgemäß ist ferner ein Aktuator, beispielsweise ein elektromotorischer oder elektromagnetischer Aktuator zur Relativverstellung des Stellglieds gegenüber der Ausgangswelle vorgesehen, um die Lenkkraftunterstützungscharakteristik zu beeinflussen.
Die erfindungsgemäße Servolenkbaugruppe umfasst ferner eine Sensorik zur Messung wenigstens eines Differenzwinkels zwischen dem Stellglied und der Ausgangswelle oder zwischen dem Stellglied und der Eingangswelle. Ferner ist eine Auswerteinheit zur Auswertung der von der Sensorik bereitgestellten Messwerte vorgesehen. Die bereitgestellten Daten dienen vorteilhaft der Funktionsund Sicherheitsüberwachung der Servobaugruppe.

Die Erfindung hat den Zweck in einer Lenkung mit einem relativ zur Ausgangswelle verdrehbaren Stellglied zur Beeinflussung der Lenkkraftunterstützung wichtige Zusatzinformationen aus failsafetechnischer- und regelungstechnischer Sicht zu erhalten. Das Anbringen einer zweiten Elastizität (T-Bar) zwischen Eingangswelle und Ausgangswelle um die Relativverdrehung in den Lenkungsstrang, welche für einen konventionellen Momentensensor benötigt würde, kann mit dem Vorteil, dass ansonsten das Lenkgefühl negativ beeinflusst würde, entfallen.

Durch die lenkgetriebenahe Lage der Sensorik am Lenkgetriebe, kann der Verdrehwinkel unmittelbar zwischen Eingangswelle und Stellglied gemessen werden. Die Verdrehung kann bei der gattungsgemäßen Servobaugruppe entweder vom Fahrer und/oder von dem Aktuator verursacht werden. Im Falle, dass der Aktuator und der Fahrer gleichzeitig auf das Stellglied wirken und eine Verstellung verursachen, kann mittels der Kenntnis des Verstellweges des Aktuators diese Information zurückgerechnet und die reine Fahrerinformation ermittelt werden. Dies ist aus Failsafegründen eine wichtige Information um zu ermitteln, ob der Fahrer Kontakt mit dem Lenkrad hat.

Ferner kann der Fahrzeughersteller auf die Integration eines lenkradnahen Lenkwinkelsensors in die Lenksäule verzichten. Dies spart Bauraum, Kosten und Gewicht des Fahrzeugs.

In Form eines Systemselbsttests kann vor Fahrtbeginn die volle Funktion des Aktuator getätigten Relativverstellung des Stellglieds gegenüber der Ausgangswelle überprüft werden. Solange z.B. der Fahrer den Motor noch nicht gestartet hat und damit noch keine Lenkunterstützung durch die Pumpe vorhanden ist, kann der Aktuator durch Drehen des Stellglieds über seinen vollen Verstellweg, beispielsweise bis zur jeweiligen Beanschlagung, die volle Funktionsfähigkeit des Systems prüfen.
Beispielsweise lässt sich daraus dann die Neutralstellung bezüglich der durch die Verstellmechanik bewirkbaren Veränderung der Lenkkraftcharakteristik, beispielsweise deren Mittenstellung, ableiten und prüfen, ob sich das System seit dem oder den letzten Fahrten verstellt hat, beispielsweise durch von im EEPROM abgelegten Daten mit den aktuell ermittelten.

Solange sich der Aktuator während der Fahrt in der Neutralstellung befindet, kann über den Differenzwinkel auf das vom Fahrer eingestellte Lenkmoment geschlossen werden. Des Weiteren ist es möglich, langfristig einen Offset des Systems zu ermitteln. In der Regel sollte das Signal der Sensorik mit anderen im Fahrzeug zur Verfügung stehenden Signalen verglichen werden. So besteht beispielsweise die Möglichkeit, über den Vergleich der Radgeschwindigkeiten, Messen der Querbeschleunigung oder Bestimmen der Gierrrate unterschiedliche Fahrsituationen zu bestimmen (z.B. Geradeausfahrt). In diesem Fall könnte das Ausbalancieren des Stellglieds auf die Neutralstellung nachjustiert werden, so dass für den Fahrer bei Geradeausfahrt situationsabhängig ein momentenneutrales Lenken möglich ist.

Zudem wäre es möglich durch kleinste Stellschritte des Aktuators die mechanische Verstellhysterese/-spiel zu ermitteln. Da die Sensorik eine sehr kleine Auflösung hat, können diese Stellschritte vom Fahrer nicht aufgelöst werden, aber die mechanischen Hystereseinformationen durch z.B. Fertigungstoleranzen in die Regelstrategie mit implementiert werden. Aus obiger Funktion lässt sich dann in einem nächsten Schritt über die Lebenszeit des Systems die Zunahme des Spieles durch z.B. den Verschleiß ermitteln und ebenfalls kompensieren.

Dies wissend, lässt sich während eines Lenkvorganges durch den Fahrer und gleichzeitiges Stellen des Stellgliedes durch den Aktuator ermitteln, ob die gewünschte zusätzliche Verstellung tatsächlich gestellt wurde. Zusätzlich lässt sich hieraus dann auch ableiten, ob der Fahrer überhaupt noch in Kontakt mit dem Lenkrad steht. Sollte dem nicht so sein, dann muss das Stellglied beispielsweise die Ventilhülse über den Aktuator in Neutralstellung gedreht werden, da sonst ein ungewollter Lenkvorgang durch den Aktuator eingeleitet werden würde und das Fahrzeug die gewünschte Bahnkurve verlassen würde.

Solange der Fahrer bei gleichzeitiger Überlagerung lenkt, kann in umgekehrter Folge natürlich daraus das vom Fahrer eingestellte Lenkmoment durch Differenzrechnung ermittelt werden.

Die erfindungsgemäße Baugruppe kann grundsätzlich mit jeglichem Lenkgetriebe zwischen Ausgangswelle und Lenkstange bzw. Lenkwelle kombiniert werden, bevorzuat ist ein Zahnstanaen-Ritzel-Getriebe oder ein Kuaelumlaufaetriebe. Die Begriff Lenkstange und Lenkwelle sind synonym auszulegen und richten sich nach der Art des jeweils verwendeten Lenkgetriebes. Ein Kugelumlaufgetriebe, die Lenkung wird dann auch Blocklenkung genannt, wird im Nutzfahrzeugbereich bevorzugt eingesetzt, insbesondere in Kombination mit einem hydraulischen Servoventil.

Gemäß einer weiteren vorteilhaften Ausgestaltung ist der Aktuator ein Schrittmotor. So kann beispielsweise auf einen Encoder am Motor, um die gestellte Relativverstellung zu messen, verzichtet werden. Mit einem Schrittmotor können anhand der angeforderten Schritte und der Übersetzung des Stellgetriebes die erwartete Relativverstellung für das Stellglied, beispielsweise die Ventilhülse, prognostiziert werden. Darüber hinaus kann durch Vergleich der Informationen aus Schrittmotor und Sensorik überprüft werden, ob die gewünschte Anforderung gestellt wurde oder ein Stellfehler in Form von zu wenig, zu viel oder ungewollt vorliegt.

Bevorzugt umfasst der Eingriff zwischen Ausgangswelle und Stellglied ein mehrstufiges Planetengetriebe.

Bevorzugt sind das Servoventil und die Sensorik in einem Ventilturm des Lenkgehäuses aufgenommen oder die Sensorik kann wenigstens an dem Ventilturm des Lenkgehäuses befestigt sein.

Bevorzugt ist das Stellglied eine koaxial zur Ein- und Ausgangswelle angeordnete Ventilhülse.

Die Sensorik umfasst bevorzugt einen Differenzwinkelsensor oder wenigstens zwei Winkelsensoren. Es handelt sich bevorzugt um berührungslos arbeitende Sensoren, wie optische, induktive oder magnetische Sensoren. Noch bevorzugter handelt es sich um Sensoren mit permanentmagnetischen Gebern oder induktiv arbeitende Sensoren.

Gemäß einer bevorzugten Ausgestaltung umfasst die Sensorik eine Geberhülse, die drehfest mit der Ventilhülse verbunden ist.

Weitere Merkmale und Vorteile der Erfindung ergeben sich aus den übrigen Ansprüchen sowie der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen:
- Figur 1:: eine Schnittansicht entlang der Längsachse einer ersten Ausführungsform der erfindungsgemäßen Servolenkbaugruppe;
- Figur 2:: eine Schnittansicht einer zweiten Ausführungsform;
- Figur 3:: eine Schnittansicht einer dritten Ausführungsform.

Der Differenzwinkelsensor 20 wird über die Eingangswelle 21 geschoben und oberhalb des Ventilturmes 22 am Gehäuse befestigt. Der Hauptbestandteil des Differenzwinkelsensors 20 ist mit der Eingangswelle 21 drehfest verbunden und der Magnet 23 mittels einer Buchse, welche mit der Ventilhülse 24 als Stellglied drehfest verbunden ist, führt den Verdrehwinkel der Hülse 24 aus dem hydraulischen Bereich des Ventilturms heraus. Der dritte Teil 25 des Sensors 20 ist ortsfest mit dem Ventilturm 22 verbunden und stellt die Differenzwinkelinformation betreffend den Differenzwinkel zwischen Eingangswelle 21 und Ventilhülse 24 über einen Stecker oder Ähnlichem der nicht dargestellten Auswerteinheit zur Verfügung stellen.

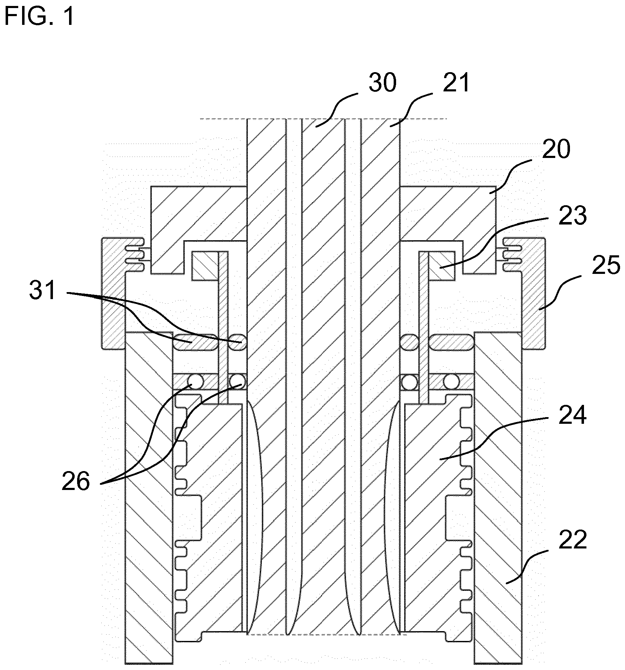

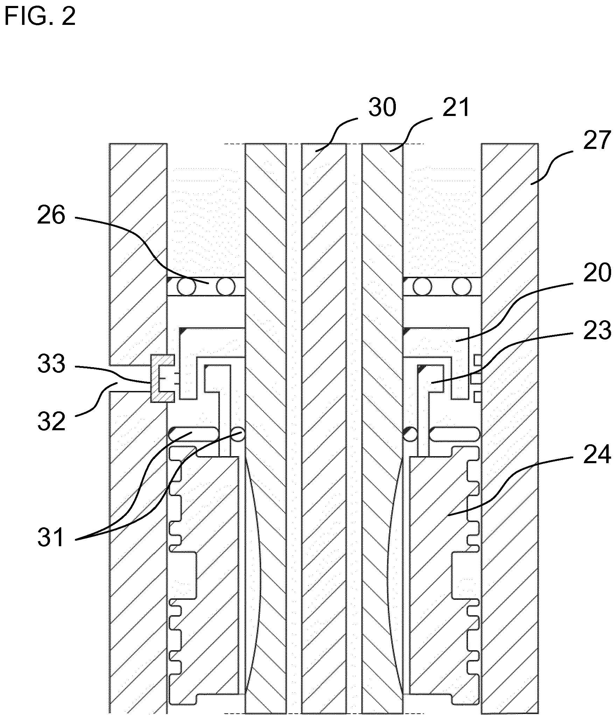

In der Ausführungsform gemäß Figur 1 umfasst die Lagerung (normalerweise regelmäßig in hydraulischen Lenkungen vorhanden), um die Eingangswelle 21 im Ventilturm 22 zu zentrieren und axiale Kräfte auszugleichen, zwei konzentrisch angeordnete Kugellager 26. Die Ausführungsform gemäß Figur 2 zeigt hierzu eine Variante. Der Ventilturm 27 ist verlängert und die zuvor erwähnte, zentrierende Lagerung 26 oberhalb des Sensors 20 eingebaut.

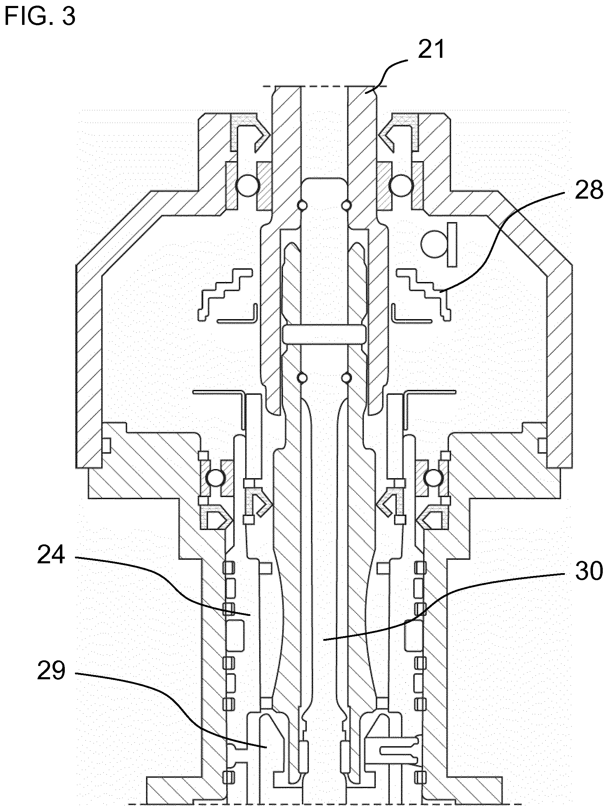

Figur 3 zeigt eine weitere Ausführungsform, die sich u.a. durch die Verwendung eines induktiven Sensors 28 zur Bestimmung des Differenzwinkels zwischen Eingangswelle 21 und Ventilhülse 24 unterscheidet.

## Patentansprüche

1. Servolenkbaugruppe für eine hydraulische Servolenkung von Kraftfahrzeugen, umfassend:
- eine Eingangswelle (21) zur Verbindung mit einem Lenkrad;
- eine mit der Eingangswelle (21) gekoppelte Ausgangswelle (29) für den Wirkeingriff mit einer Lenkstange, wobei die Kopplung zwischen Eingangswelle (21) und Ausgangswelle (29) eine Relativverdrehung zwischen diesen zulässt;
- ein hydraulisches Servoventil mit einem drehbaren, mit der Ausgangswelle (29) in Eingriff stehenden und von der Ausgangswelle (29) angetriebenes Stellglied (24), wobei in Abhängigkeit der Relativverdrehung zwischen Eingangswelle (21) und Stellglied (24) die Lenkkraftunterstützung gesteuert wird, wobei der Eingriff zwischen Ausgangswelle (29) und Stellglied (24) eine Relativverstellung zwischen beiden vorsieht;
- einen Aktuator zur Relativverstellung des Stellglieds (24) gegenüber der Ausgangswelle (29), um die Lenkkraftunterstützungscharakteristik zu beeinflussen;
- eine Sensorik (20, 28) zur Messung wenigstens eines Differenzwinkels zwischen dem Stellglied (24) und der Ausgangswelle (29) oder zwischen dem Stellglied (24) und der Eingangswelle (21);
- eine Auswerteinheit zur Auswertung der von der Sensorik (20, 28) bereitgestellten Messwerte.

2. Servolenkbaugruppe nach einem der vorhergehenden Ansprüche, mit einer Lenkstange, wobei zwischen Ausgangswelle (29) und Lenkstange ein Zahnstangen-Ritzel-Getriebe oder ein Kugelumlaufgetriebe vorgesehen ist.

3. Servolenkbaugruppe nach einem der vorhergehenden Ansprüche, wobei der Aktuator ein Schrittmotor ist.

4. Servolenkbaugruppe nach einem der vorhergehenden Ansprüche, wobei der Eingriff zwischen Ausgangswelle (29) und Stellglied (24) ein mehrstufiges Planetengetriebe umfasst.

5. Servolenkbaugruppe nach Anspruch 1, aufweisend ferner ein Lenkgehäuse, wobei das Servoventil und die Sensorik (20, 28) in einem Ventilturm (22, 27) des Lenkgehäuses aufgenommen ist und/oder daran befestigt ist.

6. Servolenkbaugruppe nach dem vorhergehenden Anspruch, wobei das Stellglied (24) eine koaxial zur Ein- (21) und Ausgangswelle (29) angeordnete Ventilhülse ist.

7. Servolenkbaugruppe nach einem der vorhergehenden Ansprüche, wobei die Sensorik (20, 28) einen Differenzwinkelsensor oder wenigstens zwei Winkelsensoren umfasst.

8. Servolenkbaugruppe nach den beiden vorhergehenden Ansprüchen, wobei die Sensorik (20, 28) eine Geberhülse (23) umfasst, die drehfest mit der Ventilhülse (24) verbunden ist.

9. Verwendung der Servolenkbaugruppe gemäß einem der vorhergehenden Ansprüche in einem Kraftfahrzeug.

## Claims

1. A power steering assembly for a hydraulic power steering system of motor vehicles, comprising:
- an input shaft (21) for connection to a steering wheel;
- an output shaft (29) which is coupled to the input shaft (21) for operational engagement with a steering rod, the coupling between the input shaft (21) and the output shaft (29) permitting a relative rotation between them;
- a hydraulic servo valve, which has a rotatable control element (24) that is in engagement with the output shaft (29) and driven by the output shaft (29), the steering power assistance system being controlled depending on the relative rotation between the input shaft (21) and the control element (24), the engagement between the output shaft (29) and the control element (24) providing for a relative displacement between the two;
- an actuator for relatively displacing the control element (24) in relation to the output shaft (29) in order to influence the steering power assistance characteristics;
- a sensor system (20, 28) for measuring at least one differential angle between the control element (24) and the output shaft (29) or between the control element (24) and the input shaft (21);
- an evaluation unit for evaluating the measurement values provided by the sensor system (20, 28).

2. The power steering assembly according to any one of the preceding claims, comprising a steering rod, with a rack-and-pinion gear or a recirculating ball steering gear being provided between the output shaft (29) and the steering rod.

3. The power steering assembly according to any one of the preceding claims, wherein the actuator is a stepping motor.

4. The power steering assembly according to any one of the preceding claims, wherein the engagement between the output shaft (29) and the control element (24) comprises a multi-stage planetary gear unit.

5. The power steering assembly according to claim 1, further comprising a steering-gear housing, wherein the servo valve and the sensor system (20, 28) are accommodated in and/or attached to a valve tower (22, 27) of the steering-gear housing.

6. The power steering assembly according to the preceding claim, wherein the control element (24) is a valve sleeve disposed coaxially with the input (21) and the output shaft (29).

7. The power steering assembly according to any one of the preceding claims, wherein the sensor system (20, 28) preferably comprises a differential angle sensor or at least two angle sensors.

8. The power steering assembly according to the two preceding claims, wherein the sensor system (20, 28) comprises an encoder sleeve (23) non-rotatably connected to the valve sleeve (24).

9. Use of the power steering assembly according to any one of the preceding claims in a motor vehicle.

## Revendications

1. Ensemble de direction assistée pour une direction assistée hydraulique de véhicules automobiles, comprenant:
- un arbre d'entrée (21) pour la liaison à un volant de direction;
- un arbre de sortie (29) couplé à l'arbre d'entrée (21), pour l'engagement actif avec une bielle de direction, dans lequel le couplage entre l'arbre d'entrée (21) et l'arbre de sortie (29) permet une rotation relative entre ceux-ci;
- une servovalve hydraulique comprenant un élément rotatif de réglage (24) qui est en prise avec l'arbre de sortie (29) et est entraîné par l'arbre de sortie (29), dans lequel l'assistance de force de direction est commandée en fonction de la rotation relative entre l'arbre d'entrée (21) et l'élément de réglage (24), dans lequel l'engrènement entre l'arbre de sortie (29) et l'élément de réglage (24) prévoit un déplacement relatif entre les deux;
- un actionneur pour le déplacement relatif de l'élément de réglage (24) par rapport à l'arbre de sortie (29) afin d'influer sur la caractéristique d'assistance de force de direction;
- un système de capteur(s) (20, 28) destiné à mesurer au moins un angle différentiel entre l'élément de réglage (24) et l'arbre de sortie (29) ou entre l'élément de réglage (24) et l'arbre d'entrée (21);
- une unité d'évaluation destinée à évaluer les valeurs de mesure fournies par ledit système de capteur(s) (20, 28).

2. Ensemble de direction assistée selon la revendication précédente, comprenant une bielle de direction, dans lequel un engrenage à crémaillère et pignon ou un engrenage à recirculation de billes est prévu entre l'arbre de sortie (29) et la bielle de direction.

3. Ensemble de direction assistée selon l'une quelconque des revendications précédentes, dans lequel ledit actionneur est un moteur pas à pas

4. Ensemble de direction assistée selon l'une quelconque des revendications précédentes, dans lequel l'engrènement entre l'arbre de sortie (29) et ledit élément de réglage (24) comprend un engrenage planétaire à plusieurs étages.

5. Ensemble de direction assistée selon la revendication 1, présentant en outre un carter de direction, dans lequel la servovalve et le système de capteur(s) (20, 28) sont logés dans une tour de valve (22, 27) du carter de direction et/ou sont fixés sur celle-ci.

6. Ensemble de direction assistée selon la revendication précédente, dans lequel ledit élément de réglage (24) est une douille de valve disposée de façon coaxiale par rapport à l'arbre d'entrée (21) et de sortie (29).

7. Ensemble de direction assistée selon l'une quelconque des revendications précédentes, dans lequel le système de capteur(s) (20, 28) comprend un capteur d'angle différentiel ou au moins deux capteurs d'angle.

8. Ensemble de direction assistée selon les deux revendications précédentes, dans lequel le système de capteur(s) (20, 28) comprend une douille de transmetteur (23) qui est solidaire en rotation de ladite douille de valve (24).

9. Utilisation de l'ensemble de direction assistée selon l'une quelconque des revendications précédentes, dans un véhicule automobile.
